# EUROPÄISCHE PATENTSCHRIFT

(11) **EP 2 496 797 B1**
(45) Veröffentlichungstag und Bekanntmachung des Hinweises auf die Patenterteilung: **13.01.2016**
(21) Anmeldenummer: 10782215.7
(22) Anmeldetag: 02.11.2010
(51) Int. Cl.: F01K 17/04, F01K 7/22, F01K 23/10, F01K 23/14

(54) **VERFAHREN ZUM NACHRÜSTEN EINER FOSSIL BEFEUERTEN KRAFTWERKSANLAGE MIT EINER KOHLENDIOXID-ABSCHEIDEVORRICHTUNG**
METHOD FOR RETROFITTING A FOSSIL-FUELED POWER STATION WITH A CARBON DIOXIDE SEPARATION DEVICE
PROCÉDÉ D'ÉQUIPEMENT ULTÉRIEUR D'UNE CENTRALE ÉLECTRIQUE À COMBUSTIBLE FOSSILE AVEC UN DISPOSITIF DE SÉPARATION DE DIOXYDE DE CARBONE

(30) Priorität: 02.11.2009 DE 102009051646
(43) Veröffentlichungstag der Anmeldung: 12.09.2012
(73) Patentinhaber: Siemens Aktiengesellschaft, 80333 München (DE)
(72) Erfinder: GRUMANN, Ulrich, 91056 Erlangen (DE); MUCH, Ulrich, 91056 Erlangen (DE); PICKARD, Andreas, 91325 Adelsdorf (DE); ROST, Mike, 91058 Erlangen (DE)
(86) Internationale Anmeldenummer: PCT/EP2010/066623
(87) Internationale Veröffentlichungsnummer: WO 2011/051494

(56) Entgegenhaltungen:
- EP-A1- 1 473 072
- EP-A1- 2 305 364
- WO-A1-2011/039263
- WO-A2-2005/045316
- GB-A- 2 470 645
- US-A1- 2011 048 011

## Beschreibung

Für die Abscheidung von Kohlendioxid aus Abgasen von fossil befeuerten Kraftwerksanlagen, wie beispielsweise Gas- und Dampfkraftwerksanlagen (GUD) oder Kohle befeuerten Dampfkraftanlagen (DKW), ist eine große Menge an Energie erforderlich.

Bei Einsatz eines nasschemischen Absorbtions-Desorptionsverfahren zur Abscheidung von Kohlendioxid muss diese Energie in Form von thermischer Energie zur Beheizung des Desorptionsprozesses aufgebracht werden. Üblicherweise wird dazu Niederdruckdampf aus dem Wasserdampfkreislauf der Kraftwerksanlage verwendet.

Die Druckschrift WO 2005 045316 A2 offenbart ein Verfahren zur Abscheidung von Kohlendioxid aus einem Rauchgas durch Absorption mit einem Lösungsmittel, sowie eine Kohlendioxid-Abscheidevorrichtung, die in ein thermisches Kraftwerk integriert ist. In der genannten Druckschrift ist die Kohlendioxid-Abscheidevorrichtung Bestandteil der Kraftwerksanlage, wobei die Kraftwerksanlage und Kohlendioxid-Abscheidevorrichtung bereits aufeinander abgestimmt sind. Bestehende GUD oder KKW Kraftwerke ohne Kohlendioxid-Abscheidung müssen zur Erfüllung von Emissionsvorschriften mit einer Kohlendioxid-Abscheidevorrichtung nachgerüstet werden. Derartige Altanlagen weisen in der Regel noch nicht entsprechende Vorkehrungen (Capture Readyness) zur Nachrüstung einer Kohlendioxid-Abscheidevorrichtung auf.

So kann zum Beispiel das Maschinenhaus für die zusätzliche Verrohrung zur Entnahme des Niederdruckdampfes nicht ausreichend groß dimensioniert sein, oder die Dampfturbine bzw. der Kraftwerksprozess ist für die Entnahme von Niederdruckdampf nicht entsprechen konfiguriert. Bei Dampfturbinen mit getrenntem Gehäuse für die Mittel- und Niederdruckstufe ist zumindest die Entnahme von Niederdruckdampf an der Überströmleitung auf einfache Weise möglich. Hingegen bei Dampfturbinen mit einer eingehäusigen Mittel- und Niederdruckstufe sind nachträgliche Umbauten zur Entnahme der erforderlichen großen Dampfmenge oft nicht realisierbar, weshalb die Turbine in diesem Fall ausgetauscht werden muss. Auf jeden Fall muss jedoch bei Entnahme von Niederdruckdampf aus der Überströmleitung in den Niederdruckteil, der Niederdruckteil an die geänderte Schluckfähigkeit (Dampfvolumenstrom) angepasst werden.

Die Entnahme von Dampf aus anderen Quellen innerhalb des Kraftwerksprozesses ist ebenfalls nicht wirtschaftlich, oder auf geeignete Weise möglich. So führt beispielsweise eine Entnahme aus einer Zwischenüberhitzungsleitung der Dampfturbine ohne weitere Maßnahmen zur Schieflast des Kessels. Auch die Entnahme von höherwertigem Dampf für die Kohlendioxid-Abscheidevorrichtung muss ohne weitere Maßnahmen ausgeschlossen werden, da dies zu unvertretbaren Energieverlusten führt.

Ein weiteres Problem, das mit der Nachrüstung einer Kohlendioxid-Abscheidevorrichtung entsteht ist, dass bei Abschaltung oder Ausfall der Kohlendioxid-Abscheidevorrichtung schlagartig der nun nicht benötigte Niederdrucktemperaturdampf überschüssig anfällt. Dieser überschüssige Dampf kann nun nicht einfach wieder in den Dampfturbinenprozess zurückgeführt werden, da dieser auf einen Betrieb mit Kohlendioxid-Abscheidevorrichtung, also für eine geringere Dampfmenge ausgelegt ist.

Die Druckschrift EP 2 305 364 A1 beschreibt ein Fossil befeuerte Kraftwerksanlage die mit einer Kohlendioxid-Abscheidevorrichtung ausgestattet oder nachgerüstet werden kann. Dabei wird den Wasser-Dampf-Kreislauf der Kraftwerksanlage Dampf aus dem Dampferzeuger an einer Mitteldruckstufe entnommen, und einer Entspannungsturbine zugeführt, die den Dampf für die Kohlendioxid-Abscheidevorrichtung konfektioniert.

Die Druckschrift EP-1473072 beschreibt ein Fossil befeuerte Kraftwerksanlage, die mit einer Kohlendioxid-Abscheidevorrichtung ausgestaltet werden kann, wobei die Kohlendioxid-Abscheidevorrichtung über eine Prozessdampfleitung an einer kalten Zwischenüberhitzungsleitung angeschlossen wird.

Aufgabe der Erfindung ist es daher, ein kostengünstiges Verfahren zur Nachrüstung einer Kohlendioxid-Abscheidevorrichtung anzugeben, wobei die fossil befeuerte Kraftwerksanlage auch dann weiter betrieben werden können soll, wenn die Kohlendioxid-Abscheidevorrichtung nicht in Betrieb ist oder abgeschaltet wird.

Gelöst wird Aufgabe der Erfindung durch die Merkmale des Anspruchs 1.

Erfindungsgemäß wird die fossil befeuerte Kraftwerksanlage mit einer Kohlendioxid-Abscheidevorrichtung nachgerüstet. Die fossil befeuerte Kraftwerksanlage kann dabei eine Gas- und Dampfturbinenkraftwerksanlage (GUD) mit einem Abhitzedampferzeuger (AHDE) oder eine Dampfkraftwerksanlage (DKW) mit einem befeuerten Kessel (Boiler) sein. Die GUD oder DKW Anlage umfasst weiterhin eine Dampfturbine.

Die Erfindung geht von einer Dampfturbine aus, die eine eingehäusige Mittel- und Niederdruckstufe hat. Neben der Mittel- und Niederdruckstufe umfasst die Dampfturbine zudem noch eine Hochdruckstufe in einem separaten Gehäuse.

Die erfindungsgemäße Nachrüstung der fossil befeuerten Kraftwerksanlage mit einer Kohlendioxid-Abscheidevorrichtung erfolgt in mehreren Schritten, die gleichzeitig oder auch in unterschiedlicher Reihenfolge erfolgen können.

Dabei wird die Mittel- und Niederdruckstufe der Dampfturbine in einem Schritt an die neue Schluckfähigkeit angepasst, die sich durch die Entnahme von Prozessdampf für den Betrieb der Kohlendioxid-Abscheidevorrichtung ändert. Dabei werden entweder der Dampfturbinenpfad durch Austausch von Komponenten angepasst oder Teile der Niederdruckstufe ersetzt. Die Wahl der Optionen wird durch die vorhandene Dampfturbine und die zu entnehmenden Dampfmassenströme bestimmt. In einem weiteren Schritt wird die Kohlendioxid-Abscheidevorrichtung über eine Prozessdampfleitung an der kalten Zwischenüberhitzungsleitung einer Zwischenüberhitzungsleitung angeschlossen, sodass ein teilentspannter Dampf als Prozessdampf bereitgestellt wird. Im Falle eines Abschaltens der Kohlendioxid-Abscheidevorrichtung wird der Niederdruckdampf weiterhin aus der Überströmleitung entnommen. Deshalb wird parallel zur Kohlendioxid-Abscheidevorrichtung in einem weiteren Schritt ein Hilfskondensator geschaltet. Der Hilfskondensator dient dazu, den bei Ausfall oder gewollter Abschaltung der Kohlendioxid-Abscheidevorrichtung anfallenden überschüssigen Prozessdampf in dem Hilfskondensator zu kondensieren.

In einer besonderen Weiterentwicklung wird in die Prozessdampfleitung eine Gegendruckdampfturbine geschaltet. Durch die Gegendruckdampfturbine wird der entnommene Prozessdampf auf Prozessdampfzustand gebracht. Durch einen an die Gegendruckdampfturbine angeschlossenen Generator wird elektrische Energie erzeugt. Dadurch ist die überschüssige Energie des Prozessdampfes zur Erzeugung elektrischer Energie nutzbar.

Eine weitere vorteilhafte Ausgestaltung sieht vor, dass die Kohlendioxid-Abscheidevorrichtung über eine Kondensatrückführleitung mit dem Kondensator der Dampfturbine verbunden wird. Die Kondensatrückführleitung erlaubt die Rückführung des in dem Desorptionsprozess verbrauchten Prozessdampfes in den Speisewasserkreislauf der Kraftwerksanlage.

Die fossil befeuerte Kraftwerksanlage ist vorteilhaft als Gas- und Dampfturbinenkraftwerksanlage (GUD) ausgestaltet, wobei der Dampferzeuger ein Abhitzedampferzeuger ist. Alternativ kann die fossil befeuerte Kraftwerksanlage auch als Dampfturbinenkraftwerksanlage ausgestaltet sein, wobei der Dampferzeuger ein befeuerter Kessel ist.

Nachfolgend wird die Erfindung anhand von Zeichnungen näher erläutert: Darin zeigt
- FIG 1: Eine Fossil befeuerte Kraftwerksanlage, die mit einer Kohlendioxid-Abscheidevorrichtung nachgerüstet wurde; diese Kraftwerksanlage ist nicht Teil der Erfindung.
- FIG 2: Eine Weiterentwicklung der in FIG 1 dargestellten nachgerüsteten fossil befeuerte Kraftwerksanlage
- FIG 3: Eine Fossil befeuerte Kraftwerksanlage, die durch das erfindungsgemäße Verfahren mit einer Kohlendioxid-Abscheidevorrichtung nachgerüstet wurde
- FIG 4: Eine Weiterentwicklung der in FIG 3 dargestellten nachgerüsteten fossil befeuerte Kraftwerksanlage

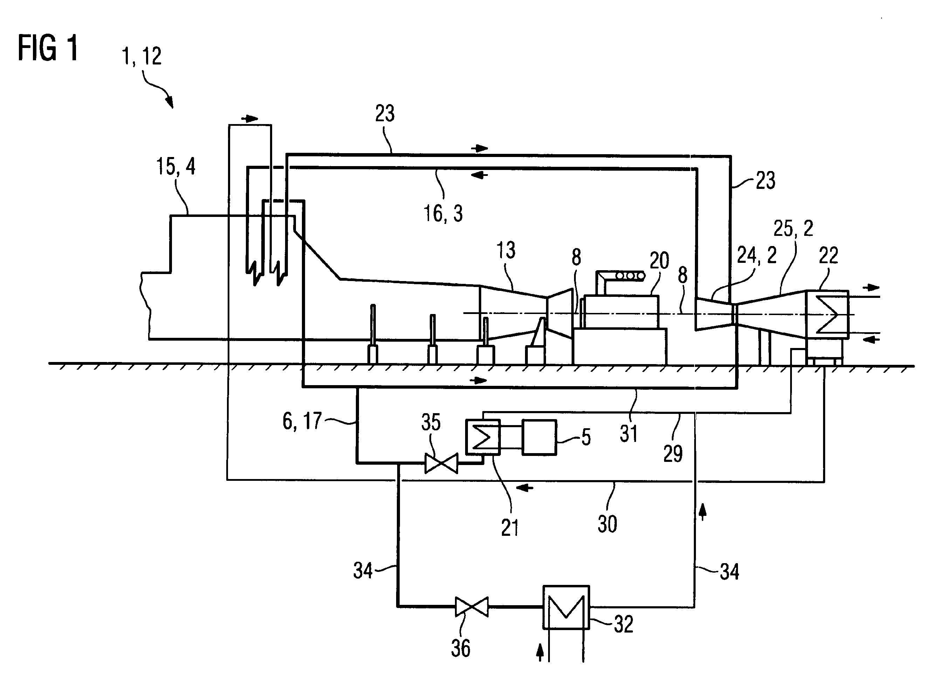

FIG 1 zeigt eine Fossil befeuerte Kraftwerksanlage 1 mit einer Kohlendioxid-Abscheidevorrichtung 5. Die fossil befeuerte Kraftwerksanlage 1 ist hier als Gas- und Dampfkraftwerksanlage (GUD) 12 ausgestaltet. Die Gas- und Dampfturbinenanlage 12 ist vereinfacht dargestellt und besteht im Wesentlichen aus einer Gasturbine 13, einer Dampfturbine 2, einem Generator 20 und einem in den Abgaskanal der Gasturbine 13 geschalteten Dampferzeuger 4, ausgestaltet als Abhitzedampferzeuger 15. Die Dampfturbine 2 besteht aus einer Hochdruckstufe 24 und einer Mittel- und Niederdurckstufe 25. Die Gasturbine 13, der Generator 20 und die Dampfturbine 2 befinden sich auf einer gemeinsamen Welle 8. Der Dampfturbine 2 ist ein Kondensator 22 nachgeschaltet.

Die Hochdruckstufe 24 ist mit dem Dampferzeuger 4 frischdampfzuführend über eine Frischdampfleitung 23 und dampfrückführend über eine Dampfrückführleitung 3, bzw. eine kalte Zwischenüberhitzungsleitung 16 verbunden. Die Mittel- und Niederdurckstufe 25 ist über eine heiße Zwischenüberhitzungsleitung 31 mit dem Dampferzeuger 4 verbunden. An der heißen Zwischenüberhitzungsleitung 31 ist zur Anzapfung eines Prozessdampfes 17 eine Prozessdampfleitung 6 angeschlossen.

Bei der Nachrüstung wurde zunächst die Schluckfähigkeit der Mittel- und Niederdruckstufe 25 der Dampfturbine 2 angepasst. Dies erfolgte durch Austausch von Komponenten oder durch Anpassung von Teilen der Mittel- und Niederdruckstufe 25. Im Folgenden wurde die Kohlendioxid-Abscheidevorrichtung 5 über einen Wärmetauscher 21 durch eine Prozessdampfleitung 6 an der heißen Zwischenüberhitzungsleitung 31 angeschlossen. Weiterhin wurde parallel zur Kohlendioxid-Abscheidevorrichtung 5 eine Bypassleitung 34 verlegt, in die ein Hilfskondensator 32 geschaltet.

Aus dem Wärmetauscher 21 wird über eine Kondensatrückführleitung 29 ein Kondensat in den Kondensator 22 ausgeleitet. Dazu ist die Kondensatrückführleitung 29 mit dem Kondensator 22 entsprechend verbunden. Schlussendlich ist eine Kondensatleitung 30 vorgesehen, die den Kondensator 22 mit dem Dampferzeuger 4 verbinder, um den Speisewasserkreislauf zu schließen.

Im Betrieb der fossil befeuerte Kraftwerksanlage 1 bei eingeschalteter Kohlendioxid-Abscheidevorrichtung 5 wird nun Prozessdampf 17 aus der heißen Zwischenüberhitzungsleitung 31 entnommen, und über die Prozessdampfleitung 6 dem Wärmetauscher 21 zugeführt, der wiederum die Wärme an die Kohlendioxid-Abscheidevorrichtung 5 abgibt. In diesem Betriebsfall ist ein erstes Ventil 35, das in die Prozessdampfleitung 6 nach der Abzweigung der Bypassleitung 34 geschaltet ist, geöffnet. Ein zweites Ventil 36, dass in die Bypassleitung 34 vor dem Hilfskondensator 32 geschaltet ist, ist geschlossen.

Kommt es zu einer Störung in der Kohlendioxid-Abscheidevorrichtung 5, oder wird diese abgeschaltet, muss der Prozessdampf 17 weiterhin aus der heißen Zwischenüberhitzungsleitung 31 entnommen werden, da die Mittel- und Niederdruckstufe 25 durch die Nachrüstung nun nicht mehr für die Aufnahme dieses Dampfes ausgelegt ist. Der Prozessdampf wird deswegen über die Bypassleitung 34 in den Hilfskondensator 32 geleitet. Dazu wird das erste Ventil 35 geschlossen und das zweite Ventil 36 in der Bypassleitung 34 geöffnet.

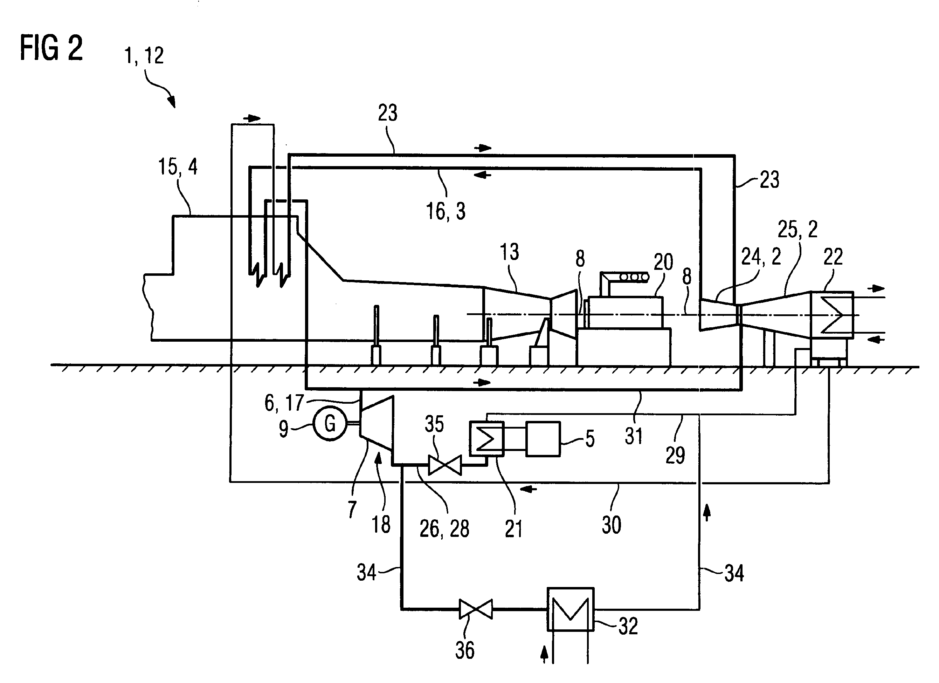

FIG 2 zeigt eine Weiterentwicklung der in FIG 1 dargestellten nachgerüsteten fossil befeuerte Kraftwerksanlage, die durch mit einer Kohlendioxid-Abscheidevorrichtung nachgerüstet wurde. In der in FIG 2 gezeigten Ausführungsform ist neben der Dampfturbine 2 eine Gegendruckdampfturbine 7 vorgesehen, die in die Prozessdampfleitung 6 geschaltet ist. In der Gegendruckdampfturbine 7 findet ein Entspannungsprozess 18 des Prozessdampfes 17 zu einem Sattdampf 26 statt. Der Prozessdampf 17 wird dabei durch einen an die Gegendruckdampfturbine 7 angeschlossenen Generator 9 in elektrische Energie umgewandelt. Die Austrittstemperatur aus der Gegendruckdampfturbine liegt bei ca. 290 °C.

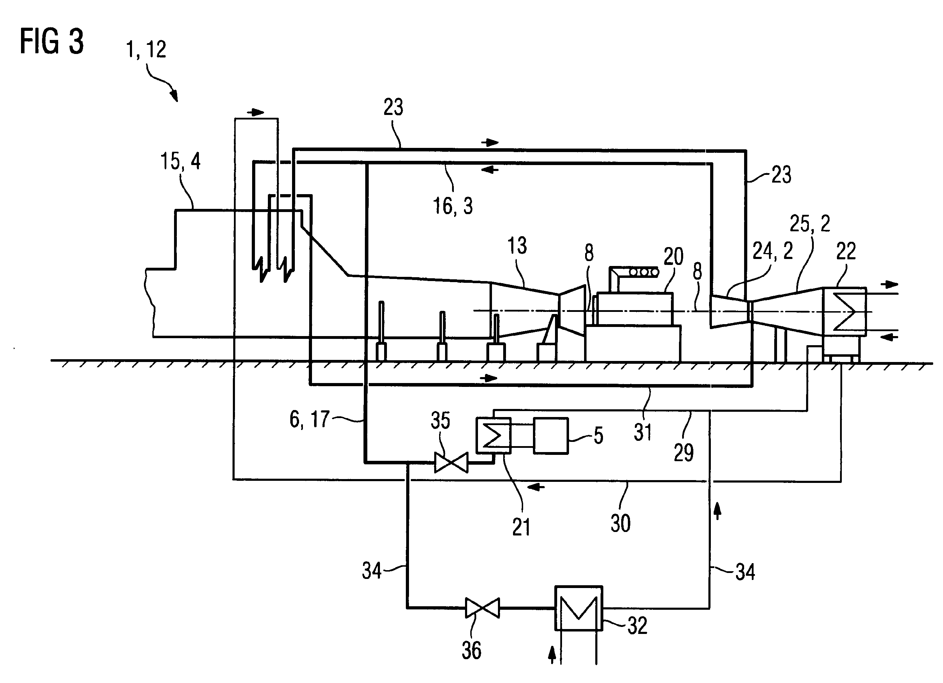

FIG 3 zeigt eine Fossil befeuerte Kraftwerksanlage, die durch das erfindungsgemäße Verfahren mit einer Kohlendioxid-Abscheidevorrichtung nachgerüstet wurde. Im vorliegenden Ausführungsbeispiel wurde die Kohlendioxid-Abscheidevorrichtung 5 über einen Wärmetauscher 21 durch eine Prozessdampfleitung 6 bzw. Sattdampfleitung 28 an der kalten Zwischenüberhitzungsleitung 16 angeschlossen. Eine Gegendruckdampfturbie ist nicht vorgesehen.

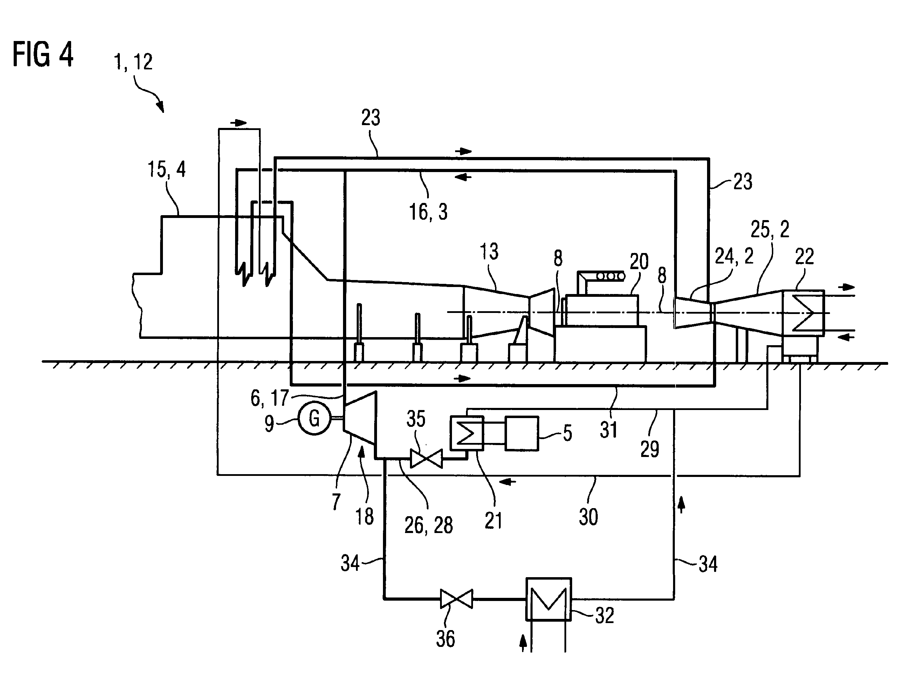

FIG 4 zeigt wie in FIG 3 die Entnahme von Prozessdampf 17, bzw. den Anschluss der Prozessdampfleitung 6 an der kalten Zwischenüberhitzungsleitung 16. In der Weiterentwicklung der FIG 4 ist nun wie im Vergleich zur FIG 2 eine Gegendruckdampfturbine 7 in die Prozessdampfleitung 17 geschaltet. Die Austrittstemperatur der Gegendruckdampfturbine 7 liegt bei ca. 160 °C. Ebenfalls wie in FIG 2 ist ein Generator zur Stromerzeugung vorgesehen.

## Patentansprüche

1. Verfahren zum Nachrüsten einer eine mehrgehäusige Dampfturbine (2) umfassenden fossil befeuerten Kraftwerksanlage (1) mit einer Kohlendioxid-Abscheidevorrichtung (5), bei dem
a) die Schluckfähigkeit der Dampfturbine (2) an den für den Betrieb der Kohlendioxid-Abscheidevorrichtung (5) zu entnehmenden Prozessdampf (17) angepasst wird, und
b) die Kohlendioxid-Abscheidevorrichtung (5) über eine Prozessdampfleitung (6) an der kalten Zwischenüberhitzungsleitung (16) einer Zwischenüberhitzungsleitung (33) angeschlossen wird, wobei ein teilentspannter Dampf als Prozessdampf (17) bereitgestellt wird, und **dadurch gekennzeichnet, dass**;
c) parallel zur Kohlendioxid-Abscheidevorrichtung (3) ein Hilfskondensator (32) geschaltet wird, sodass bei Ausfall oder gewollter Abschaltung der Kohlendioxid-Abscheidevorrichtung (3) überschüssiger Prozessdampf (17) in dem Hilfskondensator (32) kondensiert wird.

2. Verfahren nach Anspruchch 1, bei dem in die Prozessdampfleitung (6) eine Gegendruckdampfturbine (7) geschaltet wird.

3. Verfahren nach einem der Ansprüche 1 bis 2, bei dem die Kohlendioxid-Abscheidevorrichtung (5) über eine Kondensatrückführleitung (29) mit dem Kondensator (22) der Dampfturbine (2) verbunden wird.

4. Verfahren nach einem der Ansprüche 1 bis 3, bei dem die fossil befeuerte Kraftwerksanlage eine Gas- und Dampfturbinenkraftwerksanlage ist, wobei der Dampferzeuger ein Abhitzedampferzeuger ist.

5. Verfahren nach einem der Ansprüche 1 bis 3, bei dem die fossil befeuerte Kraftwerksanlage eine Dampfturbinenkraftwerksanlage ist, wobei der Dampferzeuger ein befeuerter Kessel ist.

6. Fossil befeuerte Kraftwerksanlage, die gemäß dem Verfahren nach einem der Ansprüche 1 bis 5 nachgerüstet ist.

## Claims

1. Method for retrofitting a fossil-fuelled power station (1) comprising a multi-housing stream turbine (2) with a carbon dioxide separation device (5), in which
a) the suction capability of the steam turbine (2) is adapted for the operation of the carbon dioxide separation device (5) to the process steam to be removed (17) and
b) the carbon dioxide separation device (5) is connected via a process steam line (6) to the cold intermediate superheating line (16) of an intermediate superheating line (33), wherein a partly-relaxed steam is provided as process steam (17) and **characterised in that**:
c) an auxiliary condenser (32) is connected to the carbon dioxide separation device (3) in parallel, so that on failure or deliberate switching off of the carbon dioxide separation device (3) surplus process steam (17) is condensed in the auxiliary condenser (32).

2. Method according to claim 1, in which a back-pressure turbine (7) is connected into the process steam line (6).

3. Method according to one of claims 1 to 2, in which the carbon dioxide separation device (5) is connected via a condensate feedback line (29) to the condenser (22) of the steam turbine (2).

4. Method according to one of claims 1 to 3, in which the fossil-fuelled power station is a combined cycle power station, wherein the steam generator is a waste heat steam generator.

5. Method according to one of claims 1 to 3, in which the fossil-fuelled power station is a steam turbine power station, wherein the steam generator is a fired boiler.

6. Fossil-fuelled power station which is retrofitted according to the method according to one of claims 1 to 5.

## Revendications

1. Procédé de rééquipement d'une centrale (1) électrique alimentée en combustible fossile, comprenant une turbine ( 2 ) à vapeur à plusieurs carcasses et un dispositif ( 5 ) de séparation du dioxyde de carbone, dans lequel
a) on adapte le débit de dimensionnement de la turbine ( 2 ) à la vapeur ( 17 ) de processus à prélever pour le fonctionnement du dispositif ( 5 ) de séparation du dioxyde de carbone et
b) on raccorde le dispositif ( 5 ) de séparation de dioxyde de carbone au conduit ( 16 ) froid de surchauffe intermédiaire d'un conduit ( 33 ) de surchauffe intermédiaire par l'intermédiaire d'un conduit ( 6 ) pour de la vapeur de processus, une vapeur partiellement détendue étant mise à disposition comme vapeur ( 17 ) de processus et **caractérisé en ce que**
c) on monte un condenseur ( 32 ) auxiliaire en parallèle au dispositif ( 3 ) de séparation de dioxyde de carbone de manière à condenser, en cas de panne ou d'arrêt délibéré du dispositif ( 3 ) de séparation de dioxyde de carbone, de la vapeur ( 17 ) de processus en excès dans le condenseur ( 32 ) auxiliaire.

2. Procédé suivant la revendication 1, dans lequel on monte une turbine ( 7 ) à vapeur de contre-pression dans le conduit ( 6 ) pour de la vapeur de processus.

3. Procédé suivant l'une des revendications 1 à 2, dans lequel on met le dispositif ( 5 ) de séparation de dioxyde de carbone en communication avec le condenseur ( 22 ) de la turbine ( 2 ) à vapeur par un conduit ( 29 ) de retour du produit condensé.

4. Procédé suivant l'une des revendications 1 à 3, dans lequel la centrale électrique alimentée en combustible fossile est une centrale électrique à turbine à gaz et à turbine à vapeur, le générateur de vapeur étant un générateur de vapeur à récupération de la chaleur perdue.

5. Procédé suivant l'une des revendications 1 à 3, dans lequel la centrale électrique alimentée en combustible fossile est une centrale électrique à turbine à vapeur, le générateur de vapeur étant une chaudière à foyer.

6. Centrale électrique alimentée en combustible fossile, qui est rééquipée par le procédé suivant l'une des revendications 1 à 5.
